# FASCICULE DE BREVET EUROPEEN

(11) **EP 0 472 138 B1**
(45) Date de publication et mention de la délivrance du brevet: **25.10.1995**
(21) Numéro de dépôt: 91113850.1
(22) Date de dépôt: 19.08.1991
(51) Int. Cl.: F16K 7/16

(54) **Robinet de fond de cuve**
Bodenventil
Bottom valve

(30) Priorité: 22.08.1990 FR 9010559
(43) Date de publication de la demande: 26.02.1992
(73) Titulaire: GEC ALSTHOM SAPAG, 59428 Armentières (FR)
(72) Inventeur: Besombes, Alain, F-78180 Montigny le Bretonneux (FR)
(74) Mandataire: Weinmiller, Jürgen

(56) Documents cités:
- DE-A- 3 017 085
- FR-A- 1 240 858
- FR-A- 2 442 388
- FR-A- 2 523 720
- US-A- 3 399 695
- US-A- 4 653 526

## Description

Dans les industries agro-alimentaires, pharmaceutiques et cosmétiques, les installations comportent des cuves dans lesquelles sont mélangés ou fabriqués divers produits. Pour vider le contenu de ces cuves, celles-ci sont équipées dans leur fond d'un robinet communément "robinet de fond de cuve".

Lorsque la cuve est vidangée, on la nettoie et très souvent on la stérilise, ainsi que le robinet de fond de cuve, soit à l'aide d'un acide ou d'une base, soit à la vapeur (entre 121 et 145°C). Dans ce cas, le robinet comporte deux voies : entrée et sortie. Pour la mise en oeuvre de certains procédés, le circuit de vidange doit absolument être stérile au moment de l'évacuation du produit ; dans ce cas, le robinet comporte une troisième voie qui est une entrée de vapeur.

Quand il est fermé, le robinet doit bien sûr être étanche, mais il doit aussi garder sa stérilité pour éviter la contamination du contenu de la cuve. Il doit aussi pouvoir garantir que le volume de rétention est minimal dans le fond de la cuve pour éviter un mauvais mélange des produits.

L'invention a pour but de résoudre le problème des robinets de fond de cuve qui doivent être stériles et assurer un volume de rétention minimal dans la cuve.

Les robinets de fond de cuve utilisés actuellement sont :
- à clapet s'ouvrant soit à l'intérieur du robinet, soit à l'extérieur, c'est-à-dire dans la cuve ;
- à tournant sphérique ;
- ou à papillon.

Ces robinets connus présentent notamment l'inconvénient qu'ils comportent des éléments qui constituent des "pièges à bactéries" tels que presse étoupe, gorges de joints, mécanismes, zones de rétention. Pour maintenir leur stérilité, il est nécessaire de maintenir une "barrière stérile" ce qui nécessite une dépense d'énergie.

Le document FR-A-1 240 858 décrit un robinet de fond de cuve selon le préambule de la revendication 1 ci-après. La soupape de ce robinet repose en position fermée sur des joints logés dans des gorges.

Le document FR-A-2 523 720 décrit un dispositif de dosage avec plusieurs robinets dont la soupape d'obturation est rendue étanche par rapport à une tige de manoeuvre grâce à un soufflet.

La présente invention a notamment pour but la réalisation d'un robinet pour fond de cuve qui soit exempt, au moins à peu près, de tout élément ou forme interne susceptible de constituer un piège à bactéries, qui soit facilement stérilisable, qui soit facile à réparer en cas de détérioration, et qui n'aie en même temps qu'un coût modéré de fabrication.

Ce but est atteint selon l'invention par le robinet tel que défini par la revendication 1 ci-après. En ce qui concerne des exemples préférés de mise en oeuvre de ce robinet, référence est faite aux revendications dépendantes.

A l'aide des figures schématiques ci-jointes, on va décrire ci-après comment la présente invention peut être mise en oeuvre, étant entendu que les éléments et dispositions mentionnés et représentés ne le sont qu'à titre d'exemples non limitatifs. Lorsqu'un même élément est représenté sur plusieurs figures, il y est désigné par le même signe de référence.
- la figure 1 représente une vue en coupe axiale d'un premier robinet selon la présente invention,
- la figure 2 représente une vue partielle de ce robinet en coupe par un plan axial perpendiculaire à celui de la figure 1,
- la figure 3 représente une vue en coupe axiale d' un deuxième robinet selon la présente invention.

On va tout d'abord décrire de manière générale diverses dispositions avantageuses adoptées dans ces robinets.

Le robinet comporte les éléments suivants, qui sont connus pour remplir les fonctions indiquées :
- un corps de robinet 1 disposé sous une cuve 2 au bord d'une ouverture de cette cuve, ce corps présentant une cavité interne 8 s'ouvrant par trois ouvertures qui constituent :
- un orifice commandé 5 pour mettre ladite cuve et cette cavité interne en communication à travers ladite ouverture de cette cuve,
- un orifice complémentaire 6 pour mettre cette cavité interne en communication avec un espace extérieur,
- et une ouverture de manoeuvre 1B,
- ce corps de robinet formant un siège d'obturateur 1A autour de cet orifice commandé,
- ce robinet comportant encore :
- un élément obturateur 3A mobile entre d'une part une position avancée où il coopère avec ce siège d'obturateur pour obturer cet orifice commandé, d'autre part une position de retrait à distance de ce siège,
- une pièce de manoeuvre 10 pour déplacer cet élément obturateur en passant à travers ladite ouverture de manoeuvre,
- des moyens d'étanchéité de manoeuvre 3B pour permettre un déplacement de cette pièce de manoeuvre tout en obturant cette ouverture de manoeuvre,
- et des moyens de manoeuvre 11, 12 disposés à l'extérieur dudit corps de robinet pour entraîner ladite pièce de manoeuvre.

Conformément à la présente invention, ledit élément obturateur 3A et les dits moyens d'étanchéité 3B de manoeuvre sont constitués par une même membrane déformable 3 dont une surface exposée comporte l'élément obturateur 3A qui vient s'appliquer contre ledit siège d'obturateur 1A, et une zone périphérique annulaire, qui constitue les moyens d'étanchéité de manoeuvre 3B et entoure ledit élément obturateur 3A et qui est appliquée contre le bord de ladite ouverture de manoeuvre 1B de manière à obturer cette ouverture, cette surface exposée présentant, aussi bien dans la position avancée que dans la position de retrait de l'élément obturateur, une forme en cloche qui s'élève progressivement, à partir de cette zone périphérique, jusqu'à un sommet de cette cloche.

Le robinet comporte un couvercle 4 qui est fixé de manière amovible audit corps de robinet 1 et qui vient serrer ladite zone périphérique de ladite membrane déformable 3 contre le bord de ladite ouverture de manoeuvre 1B.

Ce couvercle 4 porte un mécanisme 11, 12 qui constitue lesdits moyens de manoeuvre.

Le corps de robinet 1 présente une forme générale en cloche à partir d'une base annulaire 1C sensiblement plane qui constitue le bord de ladite ouverture de manoeuvre 1B, ledit orifice commandé 5 étant formé au voisinage d'un sommet de cette cloche avec un décalage angulaire par rapport à ce sommet, de manière que, lorsque ce robinet est orienté pour placer cet orifice commandé au point haut de ladite cavité interne 8 et lorsque cet orifice commandé est obturé par l'élément obturateur 3A de ladite membrane 3, une zone intermédiaire annulaire 3C de cette membrane constitue un plancher incliné pour ladite cavité interne 8 autour de cet élément obturateur 3A, ledit orifice complémentaire 6 étant formé dans ce corps au contact du point bas de ce plancher de manière que la gravité assure alors l'évacuation de cette cavité interne.

L'élément obturateur 3A de ladite membrane déformable 3 présente la forme d'un corps de cloche en saillie dans ladite cavité interne 8 du corps de robinet 1, cette zone contenant un insert rigide 9 qui est manoeuvré par ladite pièce de manoeuvre 10 et qui impose cette forme à cette membrane.

Le corps de robinet 1 peut former en outre un orifice auxiliaire 7 permettant à un fluide de circuler en permanence entre cet orifice et ledit orifice complémentaire 6 à travers ladite cavité interne 8 de ce corps.

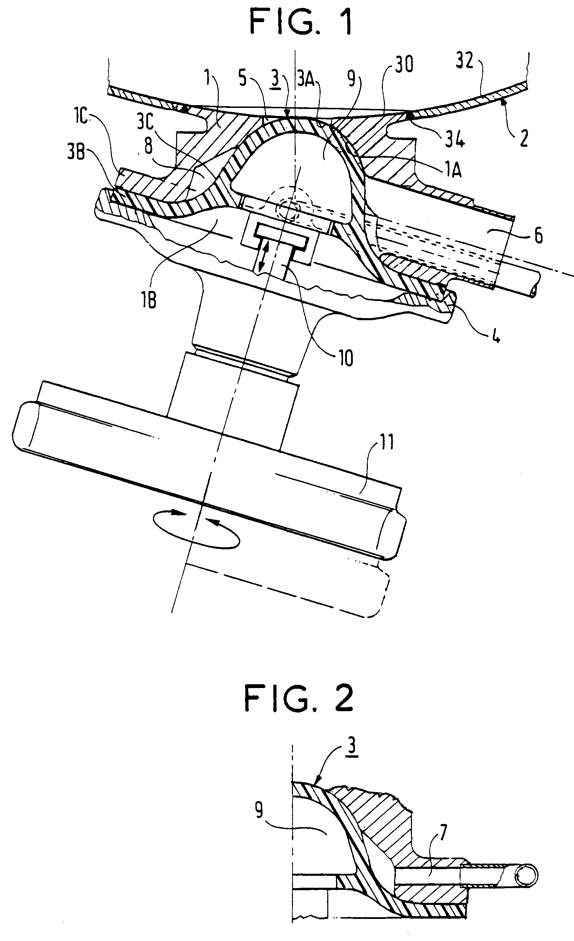

On va maintenant décrire plus particulièrement, à titre complémentaire, les robinets représentés, et d'abord celui de la figure 1.

Le robinet est constitué d'un corps 1 sur le bord d'une ouverture percée dans le fond de la cuve 2, d'une membrane 3 entourant un insert 9 et d'un couvercle 4 fixé au corps 1 par quatre boulons non représentés.

Le corps 1 comporte un orifice de commande 5 à axe vertical en communication avec la cuve et un orifice complémentaire appartenant à une tubulure d'évacuation 6.

L'axe principal du corps est incliné pour permettre une vidange complète de l'intérieur du corps lors de la fermeture du robinet.

Un orifice auxiliaire appartenant à une tubulure 7 peut déboucher dans la cavité annulaire 8. Il permet une injection permanente de vapeur ou de produit stérilisant autour de la zone d'étanchéité pour éviter toute contamination remontant par la tubulure 6.

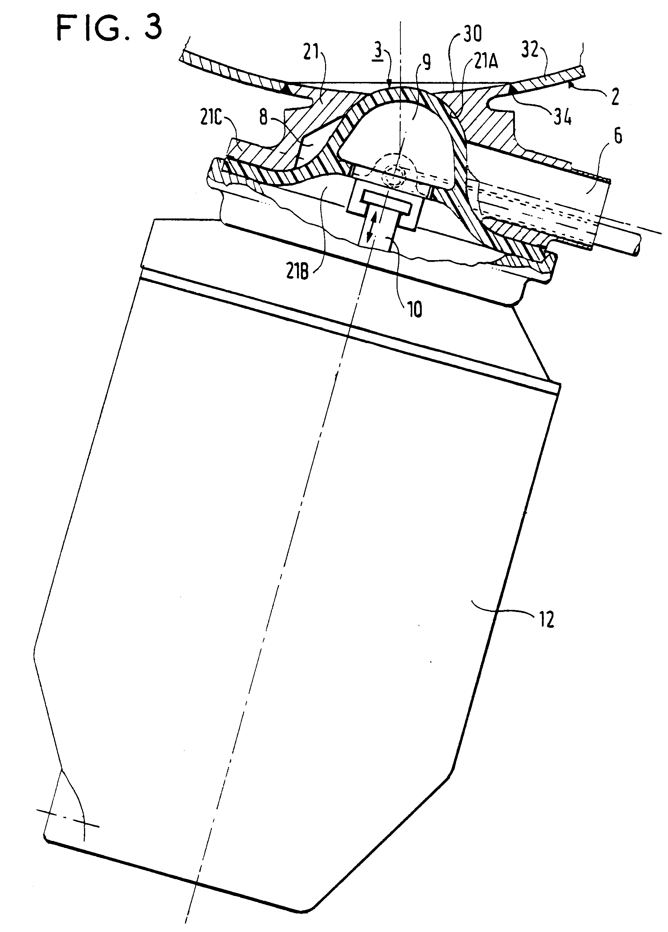

La membrane 3 est en élastomère surmoulé sur l'insert rigide 9. Ce dernier est accroché à une tige de manoeuvre 10. L'élastomère de la membrane peut être recouvert d'une feuille protectrice constituée d'une matière plastique chimiquement inerte, pour augmenter la résistance chimique du robinet. Cette membrane sert à la fois d'élément obturateur pour assurer le sectionnement du débit entre l'orifice 5 et la tubulure 6, et de moyen d'étanchéité pour isoler le fluide, circulant dans le robinet, du couvercle 4 et d'un mécanisme de commande dont le couvercle 4 est équipe . Ce mécanisme entraîne un déplacement axial de la tige de manoeuvre 10. Il peut être constitué par un volant 11 (voir figure 1) ou par un moteur 12 pneumatique ou électrique (voir figure 3).

Le deuxième robinet de la figure 3 est analogue au premier robinet de la figure 1 sauf, d'une part en ce qui concerne les mécanismes de manoeuvre 11 et 12 qui viennent d'être indiqués, d'autre part sur les points suivants :

Le premier robinet est utilisé dans le cas d'une cuve de mélangeur comportant une pale d'agitation faisant racleur. Le volume non mélangé est alors insignifiant puisque la membrane 3 vient au ras du fond de cuve ( figure 1).

Par contre, dans le cas d'une cuve de mélangeur comportant une pale d'agitation ne raclant pas le fond de cuve, on utilise le deuxième robinet dont la membrane déborde légèrement dans la cuve. La rétention de liquide est alors nulle (figure 3).

Le corps 1 du premier robinet est alors remplacé par un corps légèrement différent 21 formant un siège 21 A, une ouverture de manoeuvre 21 B et ayant une base annulaire 21 C .

L'invention permet d'obtenir les avantages suivants :
- Absence de joints, de gorges, de guidages ou de filetages en contact avec le fluide, difficiles à nettoyer et à stériliser,
- Deux pièces seulement sont en contact avec le fluide,
- Du fait de l'inclinaison de l'axe du robinet, on a une vidange complète de la cavité intérieure du corps.
- Le corps ne comporte pas de zone d'usure et peut donc être soudé à la cuve.
- La remise en état du robinet se fait très facilement par démontage du couvercle et changement de la membrane.
- Le robinet a un faible encombrement, ce qui est appréciable pour un appareil monté sous une cuve.

Par ailleurs on utilise avec avantage la disposition suivante : le corps de robinet 1 présente une paroi supérieure 30 disposée pour être intégrée par soudure à une paroi de fond 32 de ladite cuve 2, ledit orifice commandé 5 étant percé dans cette paroi supérieure pour constituer en même temps ladite ouverture de cette cuve.

Un cordon de soudure circulaire 34 représenté à la figure 1 assure la liaison entre un bord aminci de la paroi supérieure 30 du corps du robinet et le reste de la paroi 32 de la cuve, ceci avec continuité de la surface supérieure de ces parois. Cette disposition présente les avantages suivants :
- le très faible volume de rétention (figure 1) lorsque la membrane ne doit pas dépasser le fond de la cuve (cuve avec agitateur par exemple), ou l'absence même de rétention : (figure 3) lorsque la membrane peut dépasser le fond de la cuve.
- le fait que la membrane peut se trouver, en position fermée du robinet, à l'intérieur de la cuve, permet, lorsqu'un dépôt solide s'est formé dans le fond de cette dernière et constitue une couche solide parfois appelée croûte, de crever cette couche en ouvrant le robinet et d'assurer ainsi la vidange de la cuve (effet casse-croûte).

## Revendications

1. Robinet de fond de cuve comportant :
- un corps de robinet (1) disposé sous une cuve (2) au bord d'une ouverture de cette cuve, ce corps présentant une cavité interne (8) s'ouvrant par trois ouvertures qui constituent :
- un orifice commandé (5) pour mettre ladite cuve (2) et cette cavité interne (8) en communication à travers ladite ouverture de cette cuve,
- un orifice complémentaire (6) pour mettre cette cavité interne (8) en communication avec un espace extérieur,
- et une ouverture de manoeuvre (1B),
- ce corps de robinet formant un siège d'obturateur (1A) autour de cet orifice commandé (5),
- ce robinet comportant encore :
- un élément obturateur (3A) présentant une zone d'obturation et une zone d'étanchéité annulaire entourant cette zone d'obturation sans discontinuité entre ces deux zones, cet élément obturateur (3A) étant mobile entre d'une part une position avancée où cette zone d'obturation obture cet orifice commandé (5) et où cette zone d'étanchéité coopère avec ce siège d'obturateur (1A) pour assurer l'étanchéité de cette obturation, et d'autre part une position de retrait à distance de ce siège (1A),
- une pièce de manoeuvre (10) déplaçable traversant ladite ouverture de manoeuvre (1B), pour permettre de déplacer cet élément obturateur (3A) alternativement entre ces positions avancées et de retrait,
- des moyens de liaison de manoeuvre (9) liant cette pièce de manoeuvre (10) à l'élément obturateur (3A) pour que les déplacements de cette pièce (10) entraînent ceux de cet élément (3A),
- des moyens d'étanchéité (3B) de manoeuvre pour obturer de manière étanche l'ouverture de manoeuvre (1B) tout en permettant les déplacements de la pièce de manoeuvre (10),
- et des moyens de manoeuvre (11,12) disposés à l'extérieur dudit corps de robinet (1) pour entraîner les déplacements de la pièce de manoeuvre (10),
- ce robinet étant caractérisé par le fait que ledit élément obturateur (3A) et lesdits moyens d'étanchéité (3B) de manoeuvre sont constitués par une même membrane déformable (3) dont une surface exposée comporte d' une part ledit élément obturateur (3A) et d'autre part une zone périphérique annulaire qui entoure ledit élément obturateur (3A) et qui est appliquée contre le bord de ladite ouverture de manoeuvre (1B) pour constituer lesdits moyens d'étanchéité (3B) de manoeuvre, cette surface exposée présentant, aussi bien dans la position avancée que dans la position de retrait de l'élément obturateur, une forme en cloche qui s'élève progressivement, à partir de cette zone périphérique, jusqu'à un sommet de cette cloche, lesdits moyens de liaison de manoeuvre (9) étant réalisés intérieurement à cette cloche.

2. Robinet selon la revendication 1 caractérisé par le fait que ledit corps de robinet (1) présente une paroi supérieure (30) disposée pour être intégrée par soudure à une paroi de fond (32) de ladite cuve (2), ledit orifice commandé (5) étant percé dans cette paroi supérieure pour constituer en même temps ladite ouverture de cette cuve.

3. Robinet selon la revendication 1 caractérisé par le fait qu'il comporte un couvercle (4) qui est fixé de manière amovible audit corps de ce dernier (1) et qui vient serrer ladite zone périphérique (3B) de ladite membrane déformable (3) contre le bord de ladite ouverture de manoeuvre (1B).

4. Robinet selon revendication 3 caractérisé par le fait que ledit couvercle (4) porte un mécanisme (11, 12) qui constitue lesdits moyens de manoeuvre.

5. Robinet selon revendication 1 caractérisé par le fait que ledit corps de robinet (1) présente une forme générale en cloche à partir d'une base annulaire (1C) sensiblement plane qui constitue le bord de ladite ouverture de manoeuvre (1B), ledit orifice commandé (5) étant formé au voisinage d'un sommet de cette cloche avec un décalage angulaire par rapport à ce sommet, de manière que, lorsque ce robinet est orienté pour placer cet orifice commandé au point haut de ladite cavité interne (8) et lorsque cet orifice commandé est obturé par l'élément obturateur (3A) de ladite membrane (3), une zone intermédiaire annulaire (3C) de cette membrane constitue un plancher incliné pour ladite cavité interne (8) autour de cet élément obturateur (3A), ledit orifice complémentaire (6) étant formé dans ce corps au contact du point bas de ce plancher de manière que la gravité assure alors l'évacuation de cette cavité interne.

6. Robinet selon revendication 5 caractérisé par le fait que l'élément obturateur (3A) de ladite membrane déformable (3) présente la forme d'un corps de cloche en saillie dans ladite cavité interne (8) dudit corps de robinet (1), cette zone contenant un insert rigide (9) qui est manoeuvré par ladite pièce de manoeuvre (10) et qui impose cette forme à cette membrane.

7. Robinet selon revendication 1 caractérisé par le fait que ledit corps de robinet (1) forme en outre un orifice auxiliaire (7) permettant à un fluide de circuler en permanence entre cet orifice et ledit orifice complémentaire (6) à travers ladite cavité interne.

## Claims

1. A valve according to claim 1, comprising:
a valve body (1) disposed beneath a vat (2) at the margin of an opening through the vat, the body presenting an internal cavity (8) into which three openings open out, the openings constituting:
a controlled orifice (5) for putting said vat (2) and said internal cavity (8) into communication via said opening through said vat;
a complementary orifice (6) for putting said internal cavity (8) into communication with an outside space; and
a drive opening (1B);
the valve body constituting a shutter seat (1A) around said controlled orifice (5);
said valve further including:
a shutter member (3A) having a shutter zone and an annular sealing zone surrounding said shutter zone without discontinuity between the two zones, said shutter member (3A) being movable firstly between an advanced position in which said shutter zone shuts said controlled orifice (5) and in which said sealing zone co-operates with said shutter seat (1A) to ensure said shutter is sealed, and secondly a retracted position at a distance from said seat (1A);
a displaceable drive part (10) passing through said drive opening (1B) to displace said shutter member (3A) alternately between said advanced and retracted positions;
drive connection means (9) connecting said drive part (10) to the shutter member (3A) so that displacements of said part (10) drive displacements of said member (3A);
drive sealing means (3B) for shutting in sealed manner the drive opening (1B), while allowing displacements of the drive part (10); and
drive means (11, 12) disposed outside said valve body (1) for driving displacements of the drive piece (10);
the valve being characterized by the fact that said shutter member (3A) and said drive sealing means (3B) are constituted by the same deformable membrane (3) whose exposed surface includes firstly said shutter member (3A) and secondly an annular peripheral region which surrounds said shutter member (3A), and which presses against the margin of said drive opening (1B) in order to constitute said drive sealing means (3B), said exposed surface presenting, both in the advanced position and in the retracted position of the shutter member, a bell-shape, rising smoothly from said peripheral region to a top of said bell-shape, said drive connection means (9) being provided on the inside of said bell-shape.

2. A valve according to claim 1, characterized by the fact that said valve body (1) has a top wall (30) disposed to be integrated with a bottom wall (32) of said vat (2) by welding, said controlled orifice (5) being pierced through said top wall to simultaneously constitute said opening of said vat.

3. A valve according to claim 1, characterized by the fact that it includes a cover (4) which is removably fixed to said valve body (1) and which clamps said peripheral region (3B) of said deformable membrane (3) against the margin of said drive opening (1B).

4. A valve according to claim 3, characterized by the fact that said cover (4) carries a mechanism (11, 12) which constitutes said drive means.

5. A valve according to claim 1, characterized by the fact that said valve body (1) is generally bell-shaped on a substantially plane annular base (1C) constituting the margin of said drive opening (1B), said controlled orifice (5) being formed in the vicinity of the top of said bell-shape and being angularly offset relative to said top so that when said valve body is disposed to place said controlled orifice at the top of said internal cavity (8), and when said controlled orifice is closed by the shutter element (3A) of said membrane (3), an annular intermediate region (3C) of said membrane constitutes a sloping floor for said internal cavity (8) around said shutter element (3A), said complementary orifice (6) being formed through said body in contact with the lowest point of said floor so that said internal cavity can be emptied under gravity.

6. A valve according to claim 5, characterized by the fact that the shutter element (3A) of said deformable membrane (3) is in the form of a bell-shaped body projecting into said internal cavity (8) of said valve body (1), said region containing a rigid insert (9) which is driven by said drive part (10) and which imposes said shape on said membrane.

7. A valve according to claim 1, characterized by the fact that said valve body (1) also forms an auxiliary orifice (7) enabling a fluid to flow permanently between said orifice and said complementary orifice (6) through said internal cavity.

## Patentansprüche

1. Ventil am Boden eines Bottichs, das aufweist:
- einen Ventilkörper (1), der sich unter einem Bottich (2) am Rand einer Öffnung dieses Bottichs befindet, wobei dieser Körper einen inneren Hohlraum (8) aufweist, der drei Öffnungen besitzt, nämlich:
- eine verschließbare Öffnung (5), die den Bottich (2) und diesen inneren Hohlraum (8) verbindet,
- eine komplementäre Öffnung (6), um den inneren Hohlraum (8) mit einem äußeren Raum in Verbindung zu setzen,
- und eine Betätigungsöffnung (1B),
wobei der Ventilkörper einen Verschlußsitz (1A) um diese verschließbare Öffnung (5) herum bildet,
- ein Verschlußorgan (3A), das eine Verschlußzone und eine diese Verschlußzone umgebende ringförmige Dichtzone ohne Unterbrechung zwischen diesen beiden Zonen aufweist, wobei dieses Verschlußorgan (3A) zwischen einer vorderen Stellung, in der die Verschlußzone die verschließbare Öffnung (5) verschließt und in der die Dichtzone mit dem Verschlußsitz (1A) zusammenwirkt, um die Dichtheit dieses Verschlusses zu gewährleisten, und einer von diesem Sitz (1A) abgehobenen Stellung beweglich ist,
- ein verschiebbares Betätigungsteil (10), das durch die Betätigungsöffnung (1B) tritt, um dieses Verschlußorgan (3A) zwischen der vorderen und der abgehobenen Stellung hin- und herzubewegen,
- Betätigungs-Verbindungsmittel (9), die das Betätigungsteil (10) mit dem Verschlußorgan (3A) verbinden, damit die Verschiebungen dieses Teils (10) die dieses Organs (3A) bewirken,
- Betätigungs-Dichtmittel (3B), um die Betätigungsöffnung (1B) dicht zu verschließen und gleichzeitig die Verschiebung dieses Betätigungsteils (10) zu ermöglichen,
- und Betätigungsmittel (11, 12), die außerhalb des Ventilkörpers (1) angeordnet sind, um die Verschiebungen des Betätigungsteils (10) zu bewirken,
dadurch gekennzeichnet, daß
das Verschlußorgan (3A) und die Betätigungs-Dichtmittel (3B) aus einer gemeinsamen verformbaren Membran (3) bestehen, von der eine vorstehende Fläche einerseits das Verschlußorgan (3A) und andererseits eine ringförmige periphere Zone enthält, die das Verschlußorgan (3A) umgibt und die gegen den Rand der Betätigungsöffnung (1B) angelegt ist, um die Betätigungs-Dichtmittel (3B) zu bilden, wobei die vorstehende Fläche sowohl in der vorderen Stellung als auch in der abgehobenen Stellung des Verschlußorgans eine Glockenform aufweist, die progressiv von dieser peripheren Zone bis zu einem Scheitel dieser Glocke verläuft, wobei die Betätigungs-Verbindungsmittel (9) innerhalb dieser Glocke ausgebildet sind.

2. Ventil nach Anspruch 1, dadurch gekennzeichnet, daß der Ventilkörper (1) eine obere Wand (30) aufweist, die so angeordnet ist, daß sie durch Verschweißen in eine Bodenwand (32) des Bottichs (2) integriert werden kann, wobei die verschließbare Öffnung in dieser oberen Wand angebracht ist und gleichzeitig die Öffnung dieses Bottichs bildet.

3. Ventil nach Anspruch 1, dadurch gekennzeichnet, daß es einen Deckel (4) aufweist, der lösbar am Ventilkörper (1) befestigt ist und der die periphere Zone (3B) der verformbaren Membran (3) gegen den Rand der Betätigungsöffnung (1B) drückt.

4. Ventil nach Anspruch 3, dadurch gekennzeichnet, daß der Deckel (4) einen Mechanismus (11, 12) trägt, der die Betätigungsmittel bildet.

5. Ventil nach Anspruch 1, dadurch gekennzeichnet, daß der Ventilkörper (1) eine allgemeine Glockenform ausgehend von einer im wesentlichen ebenen ringförmigen Basis (1C) besitzt, die den Rand der Betätigungsöffnung (1B) bildet, wobei die verschließbare Öffnung (5) in der Nähe eines Scheitels dieser Glocke mit einer Winkelverschiebung in Bezug auf diesen Scheitel ausgebildet ist, so daß, wenn dieses Ventil ausgerichtet ist, um die verschließbare Öffnung am höchsten Punkt des inneren Hohlraums (8) anzuordnen und wenn die verschließbare Öffnung vom Verschlußorgan (3A) der Membran (3) verschlossen wird, eine ringförmige Zwischenzone (3C) dieser Membran einen geneigten Boden für den inneren Hohlraum (8) um dieses Verschlußorgan (3A) herum bildet, wobei die komplementäre Öffnung (6) im Körper in Kontakt mit dem tiefsten Punkt dieses Bodens ausgebildet ist, damit die Schwerkraft die Entleerung dieses inneren Hohlraums bewirkt.

6. Ventil nach Anspruch 1, dadurch gekennzeichnet, daß das Verschlußorgan (3A) der verformbaren Membran (3) die Form eines in den inneren Hohlraum (8) des Ventilkörpers (1) vorstehenden Glockenkörpers aufweist, wobei diese Zone einen starren Einsatz (9) aufweist, der vom Betätigungsteil (10) betätigt wird und dieser Membran ihre Form aufprägt.

7. Ventil nach Anspruch 1, dadurch gekennzeichnet, daß der Ventilkörper (1) außerdem eine Hilfsöffnung (7) bildet, die es einem Fluid erlaubt, permanent zwischen dieser Hilfsöffnung und der komplementären Öffnung (6) durch den inneren Hohlraum zu strömen.
